# EUROPÄISCHE PATENTSCHRIFT

(11) **EP 0 783 134 B1**
(45) Veröffentlichungstag und Bekanntmachung des Hinweises auf die Patenterteilung: **28.03.2001**
(21) Anmeldenummer: 97890001.7
(22) Anmeldetag: 03.01.1997
(51) Int. Cl.: G03B 21/64

(54) **Diarahmen für Grossbildprojektion**
Transparency mount for large screen projection
Cache pour diapositives pour projection à grand écran

(30) Priorität: 04.01.1996 AT 1696
(43) Veröffentlichungstag der Anmeldung: 09.07.1997
(73) Patentinhaber: Gerum, Jakob, 1230 Wien (AT)
(72) Erfinder: Gerum, Jakob, 1230 Wien (AT)
(74) Vertreter: Müllner, Erwin, Dr.

(56) Entgegenhaltungen:
- DE-A- 3 122 741
- DE-A- 3 437 027
- DE-A- 3 708 406
- DE-B- 1 296 820
- US-A- 4 104 818

## Beschreibung

Die Erfindung betrifft einen Diarahmen für Großbildprojektion, der aus zwei miteinander verbindbaren im wesentlichen deckungsgleichen rechteckigen bzw. quadratischen Rahmenteilen gebildet ist, zwischen welchen das Dia, der Film bzw. eine Folie eingelegt und durch Formschlußelemente ortsfest gehalten ist. Diarahmen dieser Art sind z.B. aus der DE 1 296 820 B bekannt.

Dias dieser Größe haben beispielsweise ein Maß von 18 cm im Quadrat. Diese Dias werden in der Bühnentechnik beispielsweise zur Projektion eines Bühnenhintergrundes verwendet. Sie kommen auch in der Werbung bei der Projektion von Bildern und Texten über große Entfernungen auf Hausfassaden oder Feuermauern, die von der belebten Straße gut sichtbar sind, zum Einsatz.

Infolge der hohen thermischen Beanspruchung der Dias werden meist Rahmen aus Metall eingesetzt, die bei einer Ausführung mit 16 Schrauben zusammengeschraubt werden. Das Dia erhält eine Lochung, die dem Schraubenabstand entspricht und wird so zwischen den Rahmenteilen eingeklemmt, also kraftschlüssig und formschlüssig gehalten. Da die Lochung mit größerem Durchmesser ausgeführt wird, als der Schraubendurchmesser, verziehen sich die Dias unter dem Einfluß der durch die Projektorlampe entwickelten Hitze.

Wenn hier von Dias gesprochen wird, dann sind einerseits photographische Filme wie auch handgezeichnete Filme bzw. Folien sowie Farbfolien mit und ohne Graphik gemeint.

Das Zusammenschrauben solcher Dias ist infolge der Vielzahl der Schrauben mit einem größeren Aufwand verbunden. Werden Kunststoffrahmen verwendet, dann verwinden sich diese sofort unter dem Temperatureinfluß, sodaß das projizierte Bild bereichsweise unscharf ist. Die Bildschärfe verändert sich ferner während der Projektion.

Die Erfindung zielt darauf ab, einen Diarahmen zu schaffen, in welchem ein Großbilddia bzw. ein Film oder eine Folie rasch und zuverlässig eingesetzt werden kann und dessen Rahmenteile sehr einfach zusammengefügt werden können. Dies wird erfindungsgemäß dadurch erreicht, daß einer der beiden Rahmenteile an zwei aneinanderschließenden Seiten nach innen gerichtete Leisten mit Schwalbenschwanzprofil aufweist, daß dieser Rahmenteil ringsum Noppen als Formschlußelement aufweist, die mit Perforationen oder Öffnungen des Dias korrespondieren, daß der zweite Rahmenteil ebenfalls an zwei aneinanderschließenden Seiten nach innen gerichtete Leisten mit Schwalbenschwanzprofil aufweist, so daß beim diagonalen Ineinanderschieben der Rahmenteil bis zur deckungsgleichen Lage die Leisten ringsum aneinanderschließend vorgesehen sind, daß den Noppen des einen Rahmenteiles am anderen Rahmenteil gegenüberliegend, Langlöcher ausgebildet sind, die ein diagonal versetztes Aufeinanderlegen der Rahmenteile unter zentrierter Zwischenlage des Dias ermöglichen, wobei die Langlöcher im wesentlichen eine der diagonalen Einschubrichtung der Rahmenteile entsprechende Längserstreckung aufweisen, und daß die beiden Rahmenteile in der deckungsgleichen Lage gegenseitig fixierbar sind. Auf die Noppen der einen Rahmenhälfte wird das Dia bzw. der Film oder die Folie mit der randseitigen Lochung aufgelegt, sodann die zweite Rahmenhälfte diagonal leicht versetzt darübergelegt und schließlich werden die Rahmenhälften relativ zueinander so verschoben, daß sie dekkungsgleich liegen. In dieser Stellung greifen die randseitigen Schwalbenschwanzprofile an den gegenüberliegenden abgeschrägten Kanten an und bewirken ein Aneinanderpressen der beiden Rahmenteile, zwischen welchen das Dia eingesetzt ist. Die deckungsgleiche Endlage der beiden Rahmenteile wird durch mindestens eine zusätzliche kraftschlüssige oder formschlüssige Verbindung fixiert. Dazu können Schrauben beispielsweise an den Ecken des Rahmens und bzw. oder in den jeweiligen Längsnuten zwischen den Ecken vorgesehen sein. Eine besonders zweckmäßige Ausführungsform ermöglicht eine endgültige Lagefixierung ohne zusätzliche Schrauben und ohne Werkzeug. Die Lagefixierung wird dadurch erreicht, daß zur gegenseitigen Lagefixierung der beiden Rahmenteile in der deckungsgleichen Lage mindestens ein Langloch auf jeder der vier Seiten mit einem Rastvorsprung ausgebildet ist, über welchen die beiden Rahmenteile in die deckungsgleiche Position in welcher die Schwalbenschwanzprofile ringsum eingreifen, schiebbar sind und dort einrasten, wobei der Rastvorsprung in die Schubbahn der Noppe hineinragt und die Breite des Langloches überall mindestens dem Durchmesser der Noppe entspricht, sodaß die Federwirkung der Verrastung durch seitliche Auslenkung des gesamten seitlichen Rahmenstückes erfolgt. Beim endgültigen diagonalen Zusammenschieben der Rahmenteile werden die Rahmenstücke.seitlich diametral verformt, bis sie über den Rastvorsprung gleiten und in der Endlage einrasten. Das Material, aus welchem der Rahmen, also die beiden Rahmenteile vorzugsweise beruhen, ist ein Hochleistungskunststoff, wie Polyphenylensulfid (PPS) mit hoher Festigkeit, Steifheit und Härte sowie Formbeständigkeit bei Hitzeeinwirkung. Das Einrasten erfolgt nicht durch lokale elastische Verformung des Rastvorsprungs im Langloch, sondern durch Auslenken des gesamten Rahmenstückes zwischen den Rahmenecken, da nur in der Gesamtlänge eine Elastizität merkbar wird. Es ist ferner zweckmäßig, wenn die Noppen von den Rahmenecken ausgehend zur Mitte jedes der vier Rahmenstücke des Rahmenteiles hin abnehmenden Abstand zueinander aufweisen und der Abstand der Langlöcher korrespondierend ausgebildet ist. Die Noppen liegen vorzugsweise auf den Schnittpunkten der Seiten eines Quadrates mit den im gleichen Winkelabstand von z.B. 4 bis 5° ausgerichteten strahlenförmigen Radien des Umkreises zu dem Quadrat. Dadurch wird die Haltekraft seitens des Rahmens gegenüber dem Dia, Film oder der Folie zentralsymmetrisch ausgerichtet und optimiert.

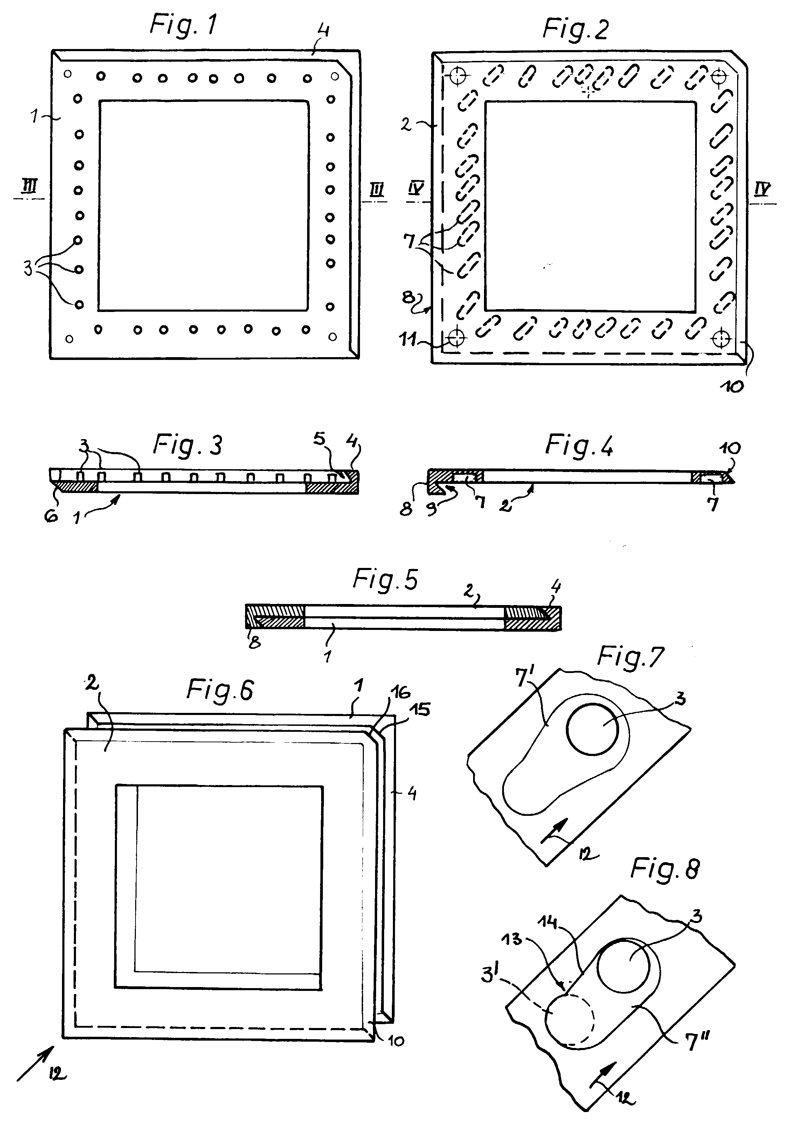

Ausführungsbeispiele des Erfindungsgegenstandes sind in den Zeichnungen dargestellt. Fig. 1 zeigt einen ersten Rahmenteil mit Noppen zum Einlegen eines Dias, Fig. 2 einen zweiten Rahmenteil, der den ersten zu einer Einheit ergänzt, Fig. 3 einen Schnitt nach der Linie III-III in Fig. 1, Fig. 4 einen Schnitt nach der Linie IV-IV in Fig. 2, Fig. 5 einen Querschnitt durch einen zusammengefügten Diarahmen, Fig. 6 die Rahmenteile in Draufsicht beim Zusammenschieben, Fig. 7 Noppe und Langloch in einer Ausführung und Fig. 8 in einer anderen, einrastenden Ausführung.

Ein Diarahmen umfaßt zwei Rahmenteile 1 und 2 aus Hochleistungskunststoff, wie beispielsweise PPS. Die Rahmenteile 1, 2 sind hier quadratisch ausgebildet. Sie schließen ein Filmstück, Dia bzw. eine Folie, die quadratisch zugeschnitten wurde, ein und halten es form- und kraftschlüssig fest. Dazu trägt der Rahmenteil 1 an den vier aneinanderschließenden Rahmenseiten ringsum Noppen 3 (Fig. 1 und 3) auf die das Filmstück mit entsprechend gestanzten Öffnungen bzw. Perforationen aufgelegt wird. Der Rahmenteil 1 weist ferner an aneinanderschließenden Rahmenstücken bzw. Rahmenseiten nach innen gerichtete Leisten 4 mit nach innen gerichteten Schwalbenschwanzprofilen 5 auf. Die den Leisten 4 gegenüberliegenden Seiten tragen Abschrägungen 6 (Fig. 3).

Der Rahmenteil 2 bildet gewissermaßen den Abschlußdeckel zum Rahmenteil 1, nachdem das Filmstück eingelegt wurde. Der Rahmenteil 2 trägt den Noppen 3 gegenüberliegend diagonal schrägerichtete Langlöcher 7, sodaß die Noppen 3 beim Aufeinanderlegen der Rahmenteile 1 und 2 ineinandergreifen. An zwei aneinanderschließenden Rahmenseiten sind ähnlich wie in Fig.1 zwei Leisten 8 vorgesehen, die nach innen gerichtete Schwalbenschwanzprofile 9 aufweisen. Die gegenüberliegenden Seiten tragen Abschrägungen 10 (Fig. 4). Durch Zusammenschieben der beiden Rahmenteile 1 und 2 gemäß Fig. 6 wird ein Diarahmen nach Fig. 5 hergestellt. Die Schwalbenschwanzverbindungen 5 und 9 greifen rundherum an den Abschrägungen 6 und 10 satt an und halten die beiden Rahmenteile 1 und 2 fest zusammen. Eine Verschraubung 11, die in Fig. 2 angedeutet ist, sorgt für die stabile Lage bzw. Lagefixierung der Rahmenteile 1 und 2 im zusammengesteckten Zustand.

Eine Form der Langlöcher 7' ist in Fig. 7 dargestellt. Zum leichteren Aufeinanderlegen der Rahmenteile 1, 2 ist eine Verbreiterung vorgesehen, in die jeweils eine Noppe 3 eingreift. Beim Zusammenschieben der Rahmenteile 1 und 2 nach Fig. 6 (Pfeil 12) gleitet die Noppe 3 zentrierend in die Verengung des Langloches 7'. Bei elastischen Kunststoffen kann dieser Vorgang mit einem Einrasten verbunden sein. Im Ausführungsbeispiel wird ein sehr harter Kunststoff PPS verwendet. Die Fixierung der Rahmenteile 1 und 2 in der Position, in welcher die Noppen 3 im schmalen, verengten Ende der Langlöcher 7' liegen, wird - wie erwähnt - durch Schrauben 11 erreicht, die auch jeweils in der Mitte der vier Seiten des Rahmens liegen können.

Eine spezielle selbstfixierende Ausführung der Rahmenteile 1 und 2 ist in Fig. 8 durch ein oder mehrere besondere Langlöcher 7" in Verbindung mit den Noppen 3 gewährleistet. Wenn ein sehr harter Kunststoff für die Rahmenteile verwendet wird, dann ergibt sich eine gewisse geringe Elastizität nur über die gesamte Seitenlänge des Rahmens. Davon ausgehend sind zumindest die in Seitenmitte der vier Rahmenstücke liegenden Langlöcher 7", deren Breite über die gesamte Länge größer als der Durchmesser der Noppen 3 ist, mit einem Rastvorsprung 13 ausgebildet. Beim Zusammenschieben in Pfeilrichtung 12 drückt die Noppe 3, die auf die vorgelagerte Schräge 14 auflauft, den Rastvorsprung 13 mitsamt dem gesamten Rahmenstück seitlich hinaus. Es wird das Material nicht örtlich verformt, sondern das Rahmenstück über seine gesamte Länge etwas nach außen gewölbt, bis es auf der Noppe 3 in der in Fig. 8 strichlierten Stellung 3' einrastet. Damit ist die deckungsgleiche Lage der Rahmenteile fixiert. Durch die am gesamten Umfang des fertigen Rahmens vorgesehenen Schwalbenschwanzprofile 5 und 9 und die Abschrägungen 6 und 10 wird eine sehr stabile, feste Verbindung erreicht. Der Film wird somit form- und kraftschlüssig zwischen den Rahmenteilen 1 und 2 festgehalten.

Zum allfällien Öffnen weist der Rahmenteil 1 eine Schrägfläche 15 auf, der eine korrespondierende Fläche 16 des Rahmenteiles 2 mit geringem Abstand im zusammengeschobenen Zustand der Rahmenteile 1, 2 gegenüberliegt. In diesen Abstand oder Spalt kann die Schneide eines Schraubendrehers eingesetzt werden. Durch Drehung desselben wirkt eine Kraft in Gegenrichtung zum Pfeil 12, die ein Überwinden der Rastvorsprünge 13 ermöglicht.

Aus den Fig. 1 und 2 ist ersichtlich, daß der Abstand der Noppen 3 auf jedem der vier Rahmenstücke gegen die Längsmitte hin abnimmt. Die Noppen liegen in einem immer gleichen Winkelabstand auf Radien eines Umkreises, die die Seiten des Quadrates des Rahmenteiles 1 schneiden. Die thermische Belastung geht von der Mitte des Dias, Films oder der Folie aus. Die spezielle Ausbildung nimmt durch die sich verringernden Abstände der Haltepunkte, in welchen die Noppen 3 in Öffnungen des Films formschlüssig eingreifen, auf die zentralsymmetrische thermische Belastung Rücksicht.

Die Ausführung nach Fig. 8 kann ferner so konzipiert werde, daß nach Überschreiten des Rastpunktes 13 eine Rastkraftkomponente bestehen bleibt, die die Rahmenteile in der Berührungsstellung der Schwalbenschwanzprofile 5, 9 und der Abschrägungen 6, 10 gegeneinander vorspannt.

Es sei ferner erwähnt, daß unter einem Schwalbenschwanzprofil 5, 9 jedes Profil verstanden wird, das beim seitlichen Ineinanderschieben die beiden Rahmenteile 1, 2 gegeneinanderpreßt.

## Patentansprüche

1. Diarahmen für Großbildprojektion, der aus zwei miteinander verbindbaren im wesentlichen deckungsgleichen rechteckigen bzw. quadratischen Rahmenteilen gebildet ist, zwischen welchen das Dia, der Film bzw. eine Folie eingelegt und durch Formschlußelemente ortsfest gehalten ist, **dadurch gekennzeichnet**, daß einer der beiden Rahmenteile (1, 2) an zwei aneinanderschließenden Seiten nach innen gerichtete Leisten (4) mit Schwalbenschwanzprofil (5) aufweist, daß dieser Rahmenteil (1) ringsum Noppen (3) als Formschlußelemente aufweist, die mit Perforationen oder Öffnungen des Dias korrespondieren, daß der zweite Rahmenteil (2) ebenfalls an zwei aneinanderschließenden Seiten nach innen gerichtete Leisten (8) mit entsprechendem Schwalbenschwanzprofil (9) aufweist, so daß beim diagonalen Ineinanderschieben der Rahmenteile (1, 2) bis zur deckungsgleichen Lage, die Leisten (4, 8) ringsum aneinanderschließend vorgesehen sind, daß den Noppen (3) des einen Rahmenteiles (1, 4) am anderen Rahmenteil (2) gegenüberliegend, Langlöcher (7, 7', 7") ausgebildet sind, die ein diagonal versetztes Aufeinanderlegen der Rahmenteile (1, 2) unter zentrierter Zwischenlage des Dias ermöglichen, wobei die Langlöcher (7, 7', 7") im wesentlichen eine der diagonalen Einschubrichtung der Rahmenteile entsprechende Längserstreckung aufweisen, und daß die beiden Rahmenteile (1, 2) in der deckungsgleichen Lage gegenseitig fixierbar sind.

2. Diarahmen nach Anspruch 1, **dadurch gekennzeichnet**, daß zur gegenseitigen Lagefixierung der beiden Rahmenteile (1, 2) in der deckungsgleichen Lage Schrauben (11) vorgesehen sind.

3. Diarahmen nach Anspruch 1, **dadurch gekennzeichnet**, daß zur gegenseitigen Lagefixierung der beiden Rahmenteile (1, 2) in der deckungsgleichen Lage mindestens ein Langloch (7") auf jeder der vier Seiten mit einem Rastvorsprung (13) ausgebildet ist, über welchen die beiden Rahmenteile (1, 2) in die deckungsgleiche Position, in welcher die Schwalbenschwanzprofile (5, 9) ringsum eingreifen, schiebbar sind und dort einrasten, wobei der Rastvorsprung (13) in die Schubbahn der Noppe (3) hineinragt und die Breite des Langloches (7") überall mindestens dem Durchmesser der Noppe (3) entspricht, sodaß die Federwirkung der Verrastung durch seitliche Auslenkung des gesamten seitlichen Rahmenstückes erfolgt.

4. Diarahmen nach Anspruch 3, **dadurch gekennzeichnet**, daß die Langlöcher (7") mit den Rastvorsprüngen (13) mittig zwischen den Rahmenecken auf den seitlichen Rahmenteilen vorgesehen sind.

5. Diarahmen nach einem der Ansprüche 1 bis 4, **dadurch gekennzeichnet**, daß die Noppen (3), von den Rahmenecken ausgehend, zur Mitte jedes der vier Rahmenstücke des Rahmenteiles (1) hin abnehmenden Abstand zueinander aufweisen und der Abstand der Langlöcher (7, 7', 7") korrespondierend ausgebildet ist.

## Claims

1. Transparency mount for large-screen projection, which is formed from two substantially coincident rectangular or square mount portions which are connectable to each other and between which the transparency, film or a sneet is laid and kept stationary by form-locking elements, characterised in that one of the two mount portions (1, 2) on two adjoining sides comprises inwardly directed strips (4) of dovetail profile (5), in that this mount portion (1) comprises knobs (3) all round as form-locking elements which correspond with perforations or openings of the transparency, in that the second mount portion (2) also on two adjoining sides comprises inwardly directed strips (8) of corresponding dovetail profile (9), so that, when the mount portions (1, 2) are slid diagonally one inside the other until they are in a coincident position, the strips (4, 8) are provided adjoining each other all round, in that opposite the knobs (3) of one mount portion (1, 4) on the other mount portion (2) are formed slots (7, 7', 7") which allow the mount portions (1, 2) to be laid one on top of the other with a diagonal offset, with the slide centred in between, wherein the slots (7, 7', 7") substantially have a longitudinal extent corresponding to the direction of diagonal insertion of the mount portions, and in that the two mount portions (1, 2) are mutually fixable in the coincident position.

2. Transparency mount according to claim 1, characterised in that screws (11) are provided for mutual fixing of the two mount portions (1, 2) in the coincident position.

3. Transparency mount according to claim 1, characterised in that, for mutual fixing of the two mount portions (1, 2) in the coincident position, at least one slot (7") is formed on each of the four sides with a latch projection (13) by which the two mount portions (1, 2) are slidable into the coincident position in which the dovetail profiles (5, 9) engage all round and latch there, wherein the latch projection (13) extends into the sliding path of the knob (3) and the width of the slot (7") corresponds everywhere to at least the diameter of the knob (3), so that the spring action of latching takes place by lateral deflection of the whole of the side mount piece.

4. Transparency mount according to claim 3, characterised in that the slots (7") with the latch projections (13) are provided symmetrically between the mount comers on the side mount portions.

5. Transparency mount according to any one of claims 1 to 4, characterised in that the knobs (3), starting from the mount comers, have a distance between them decreasing towards the centre of each of the four mount pieces of the mount portion (1) and the distance between the slots (7, 7', 7") is designed correspondingly.

## Revendications

1. Cadre de diapositive pour projection de grandes images, constitué de deux parties de cadre susceptibles d'être reliées ensemble, rectangulaires ou carrées, ayant sensiblement une forme identique, entre lesquelles la diapositive, le film ou une feuille est insérée et est maintenue localement fixe au moyen d'éléments à liaison par ajustement de forme, caractérisé en ce que l'une des deux parties de cadre (1, 2) présente, sur deux côtés dirigés vers l'intérieur et se raccordant l'un à l'autre, des bandes (4) orientées vers l'intérieur, ayant un profil en queue d'aronde (5), en ce que cette partie de cadre (1) présente, sur le pourtour, des tétons (3) faisant office d'éléments de liaison à ajustement de forme, qui correspondent à des perforations ou des ouvertures de la diapositive, en ce que la deuxième partie de cadre (2) présente également sur deux côtés se raccordant l'un à l'autre des bandes (8) orientées vers l'intérieur avec un profil à queue d'aronde (9) correspondant, de manière que, lorsque les parties de cadre (1) sont emboîtées l'une dans l'autre en diagonale jusqu'à être placées dans une position de coïncidence, les bandes (4, 8) sont prévues en se raccordant les unes les autres sur le pourtour, en ce que des trous allongés (7, 7', 7"), placés en opposition des tétons (3) d'une partie de cadre (1, 4), sont réalisés sur l'autre partie de cadre (2), ces trous allongés permettant une superposition à décalage en diagonale des parties de cadre (1, 2) avec un placement intercalaire centré de la diapositive, les trous allongés (7, 7', 7") présentant sensiblement une étendue longitudinale qui correspond à la direction d'introduction en diagonale des parties de cadre, et en ce que les deux parties de cadre (1, 2) sont susceptibles être fixées mutuellement dans la position de coïncidence.

2. Cadre de diapositive selon la revendication 1, caractérisé en ce que des vis (11) sont prévues, pour assurer la fixation mutuelle en position des deux parties de cadre (1, 2) dans la position de coïncidence.

3. Cadre de diapositive selon la revendication 1, caractérisé en ce que, au moins un trou allongé (7"), est réalisé sur chacun des quatre côtés, avec une saillie d'encliquetage (13), pour assurer la fixation mutuelle en position des deux parties de cadre (1, 2) dans la position de coïncidence, saillie d'encliquetage par l'intermédiaire de laquelle les deux parties de cadre (1, 2) sont susceptibles être coulissées dans la position de coïncidence dans laquelle les profils à queue d'aronde (5, 9) s'engagent en pourtour et s'y encliquettent, la saillie d'encliquetage (13) pénétrant dans la trajectoire de coulissement du téton (3) et la largeur du trou allongé (7") correspondant partout au moins au diamètre du téton (3), si bien que l'effet d'élasticité de l'encliquetage s'obtient par une déviation latérale de l'ensemble de la pièce latérale de cadre.

4. Cadre de diapositive selon la revendication 3, caractérisé en ce que les trous allongés (7") avec les saillies d'encliquetage (13) sont prévus centralement entre les angles de cadre, sur les parties de cadre latérales.

5. Cadre de diapositive selon l'une des revendications 1 à 4, caractérisé en ce que les tétons (3) présentent, en partant des angles de cadre, un espacement allant en diminuant vers le centre de chacune des quatre pièces de cadre de la partie de cadre (1), et l'espacement entre les trous allongés (7, 7', 7") étant de réalisation correspondante.
